# EUROPEAN PATENT APPLICATION

(11) **EP 3 159 659 A1**
(43) Date of publication of application: **26.04.2017**
(21) Application number: 15809159.5
(22) Date of filing: 22.06.2015
(51) Int. Cl.: G01C 21/26, G06F 17/30, G09B 29/00, G09B 29/10

(54) **SURVEY (BIRD'S-EYE)-TYPE NAVIGATION SYSTEM**

(30) Priority: 20.06.2014 JP 2014127655
(71) Applicant: Nishiishigaki, Kenji, Urasoe-shi, Okinawa 901-2134 (JP)
(72) Inventor: Nishiishigaki, Kenji, Urasoe-shi, Okinawa 901-2134 (JP)
(74) Representative: Grünecker Patent- und Rechtsanwälte PartG mbB
(86) International application number: PCT/JP2015/067836
(87) International publication number: WO 2015/194677

(57) **Abstract**

[Problem] A natural coordinate system of latitude and longitude, and a social coordinate system of residential house numbers (or, in areas lacking house number designations, lot number designations) are combined to enable a user to freely utilize a social coordinate system in relation to the current location identified by GPS.

[Solution] A navigation system for displaying map data that corresponds to a current location, wherein house numbers are displayed over buildings in the map data. This map data displays topography, maps, and buildings as contour lines, text, and graphics on coordinates that are defined in terms of latitude and longitude. In this navigation system, a display information generation unit (182) displays, on a display unit (13a), map data in accordance with the current location acquired by a current location acquisition unit (186) for acquiring the current location, and also displays house numbers in accordance with the coordinate locations of buildings.

## Description

### [Technical field]

The purpose of the present invention relates to survey (bird's-eye) type navigation systems such as car navigation or walk navigation.

### [Background Art]

Conventional systems are entirely dependent on the natural coordinate system of latitude and longitude for the coordinate system to find out the location, therefore, once the user specifies the desired location in the form of an address that the user understands, geographical guide to the location is provided by displaying the route or with voice to the place of interest (for example, Patent Document 1). This is because, though the latitude and longitude are suitable for the computer to understand the location information, humans cannot directly understand the actual location with this information. For example, the location of the "Equator" cannot be confirmed in red or the like that can be perceived by humans, and in the first place, humans cannot use other latitude and longitude lines as location information directly in the local geographical space. Therefore, in the conventional systems, linking with GPS and make the computer understand the latitude and longitude information of the destination location, and to guide by displaying the route to the destination on a map was essential.

This system, so to speak, relies on the rope of the guide in the darkness of latitude and longitude of the geographical space and manages to reach the destination location, the available location information connects the two points, current location and destination location, and the system is called a "Tunnel type" navigation system because of the one-dimensional form it inevitably takes.

The conventional navigation systems are very convenient systems when the destination is known beforehand, and "Only one destination has to be found at a time".

### (Problem of the conventional navigation systems)

However, for the actual and latent demand surrounding the navigation system of recent years, particularly after the Great East Japan Earthquake, demand is becoming noticeable for disaster prevention, and tourism, or over the various factors of people's lives that does not end with simply knowing the route to a predetermined destination.

That is because, in "Street walking" of disaster prevention and tourism, simply not only the goal but processes themselves leading to the goal are also informationally valuable, in the first place, the potential requirement for geographical space information itself is not limited to preset target and already-known information.

For example, regarding disaster prevention, the required information also includes potential targets whose necessity and value are known heuristically for the first time in the field and can be estimated easily from the natural and artificial character of disaster prevention or risk information exemplified below.

"Topography and elevation in the vicinity of homes and schools, evacuation sites, evacuation routes, dead ends, buildings of 3 or more floors, buildings, block fences, and vending machines that are at risk of collapse, parts of the roads that are in danger of collapse, locations that can easily become ditches when inundated, areas at risk of fire conflagration, other risks and evacuation information."

These geographical features include not only information that the citizens themselves can find while walking and exploring the actual sites closely for the first time, but also valuable information for disaster prevention and evacuation mobilization of elderly and children, people vulnerable disaster, pregnant women, and foreigners.

Moreover, disaster prevention information of the government is not necessarily well known to not only to the transferee's and migrants but also local people, and there are plenty of information discovered for the first time after exploring the local sites.

Moreover, from the perspective of sightseeing, for tourists strolling in an unfamiliar region, discovering unexpected sights and cultural assets or unexpected encounters with people or areas is considered as the real pleasure of sightseeing. Among other things, "Good security" in Japan is a precious resource for sightseeing that is not present in other countries, the achievement of a navigation system that makes the so-called "Strolling tourism" possible is urgently required from the fact that we are even holding the Tokyo Olympic Games, and to make Japan into a major tourism destination.

Incidentally, conventional systems face the following major problems for the above requirements. That is, in conventional systems, the navigation function is not useful when the destination is not known and even if you attempt to perform "Street walking" or "Strolling" using the GPS function to display the current location with the appropriate indication as a key, walking compared to a vehicle is very slow, and requires following complicated narrow paths, and supporting this at present is not possible in any way due to the accuracy of the GPS.

Moreover, the difficulty in understanding the geography of urban areas in Japan has been pointed out as a major disturbance factor to establish Japan as a tourism-oriented country from a long time.

For example, the following has been reported in the "Social experiment based 'Direction guidance by street name'" (October 2008) conducted from 2006 by the Ministry of Land, Infrastructure and Transport.

"1. 'Direction guidance by street name' is

The residence indication method of Japan is generally the block system method based on a block attached to an area partitioned by roads, railroads, and rivers, even though this approach plays a major role in residence indication, there are opinions that say it is not necessarily suitable from the perspective of ease of identifying destinations for visitors unfamiliar with the area.

On the other hand, the "Road system" which is commonly used for residence indication in Western countries, the location is displayed with the name of the street and the number attached to the roadside facility and it is considered that even visitors unfamiliar with the area can easily identify the destination.

"Direction guidance by street name" based on this background is an initiative that aims to provide easy-to-understand directions in sightseeing spots and central urban areas by creating rules that can identify the destination successfully by using the street name and the number representing the approximate location and displaying this information on the roads.

Therefore, the conventional navigation systems, to deal with the urban structural problem that leads to difficulty in understanding the geographies in urban areas, displays public facilities and famous buildings on the maps or the block number in the residence display indication area that is considered as a supplementary key for location identification, however, the solution is still far away from a fundamental solution. In street walking, from the viewpoint of efficiency and also from psychological sense of security, despite the constant requirement to know the current location accurately in complex road conditions, even though conventional navigation systems display the locations of famous buildings on the map to give a rough bird's eye view of the relationship with the current location, the above structural problem combined with the GPS error problem does not lead to guaranteeing local guidance at the walking level of the user. Hence, not only in the case of using the current location as a key but even in the case of using famous buildings, it is extremely difficult to walk on the streets or strolling around the area without getting lost, and to freely access disaster prevention and sightseeing information in the vicinity, and was far from a practical solution. Moreover, there is also a problem that foreign tourists cannot read the names of famous buildings written in Japanese and Kanji. And, evidently as stated by the above mentioned "Social experiment based 'Direction guidance by street name"', even the map display of the block number is not practical as a key to specify a destination "For visitors unfamiliar with the area".

Thus, conventional navigation systems, in addition to using latitude and longitude as the only coordinate system in practice with which understanding the actual location is impossible, reflects the structural handicap that makes understanding of the geographical space in Japan difficult as it is, and also has a big problem of GPS error to be used as a navigation system for pedestrians.

### [Prior Art Literature]

### [Patent Document]

[Patent document 1] Japanese Unexamined Patent Application Publication No. 2002-206943

### [Summary of Invention]

### [Problem to be Solved by the Invention]

The problem to be solved by the invention, as described above, is to overcome the three challenges faced by the conventional navigation system. By that, without being limited to location information that is restricted to route search for known destinations, provide location information that people can understand with a bird's-eye view of the destination from the current location to enable to searching the disaster prevention, risk information and tourist attractions actually and potentially distributed over a wide range in the region freely, efficiently, and systematically. By that, search by the user will rapidly expand the capacity to act and freedom, improving geography, disaster prevention, and tourist literacy.

### [Means to solve the Problems]

To solve the above problems, the survey (bird's-eye)-type navigation system of the present invention displays map data corresponding to the current location with a navigation system characterized by house numbers displayed on the building in the said map data. That is, in the present invention, characterized by the combining of a natural coordinate system of latitude and longitude, and a social coordinate system of residential house numbers (or, in areas lacking house number designations, lot number designations), and to enable a user to freely utilize a social coordinate system in relation to the current location identified by GPS.

By that, as in the conventional systems, the effectiveness of the exploratory behavior not bound by "Unidirectionality" such as "Familiarity" of the destination or route setting to the destination is made possible using the house numbers as the key covering the destination on the navigation map with a bird's-eye view "Heuristic" and "360 degrees all directions". This means that the search capability, its radius of action, and degree of freedom in the local geographical space are greatly expanded and improved.

As a result, even if the information of geographic locations such as evacuation sites and elevation, risk information, tourist spots, events of the region are not well known information, also, even if there are multiple information, they can be found out systematically at the same time in parallel in the field. As we have seen so far, getting lost on the way, tiredness due to too much effort, giving up before 1/10 of the goal has been achieved, and abandoning access will be eliminated.

In this way, by bringing about dramatic efficiency of exploratory behavior, the sense of accomplishment rewarding the effort will allow the users to become familiar with the geographical space of the area and use the navigation system for "Pleasure of strolling". Moreover, the large degree of freedom of the action will allow the elderly, handicapped, children and pregnant women to find the information required by each, encounter with unexpected "Discoveries" giving temporal, psychological and physical comfort.

Furthermore, the above convenience is expected to make the following big contribution to the national task of "Disaster reduction". In other words, because of the convenience of the bird's-eye type navigation system, serves for tourism strolls in addition to the knowledge on the evacuation mobilization such as elevation above sea level, evacuation path of the region, and evacuation sites, and this connection with the actions is repeated and imprinted to the mind. As a result, besides lifelong learning and sightseeing of the region's history and historic sites, local disaster prevention and risk information is retained in the head as a map image, and will be helpful in giving shape to evacuation literacy that makes reflexive evacuation behavior possible when the information becomes critical.

In addition, lot number designations of buildings is used that is universally common wherein the location information is written in "Numbers", which even children can understand. This navigation system can be easily used even by migrants, students, and foreigners who have no familiarity with the locality.

In conventional navigation systems, for example, when there are multiple alleys at intervals of 10 meters, the alley which one entered first cannot be detected with the GPS function because it is within the error range. In the present system, this information can be easily checked by displaying the address of buildings and vending machines, and one will not get lost or go out of the target direction.

In the conventional navigation system, to move by walking, the travel direction will not be clear at junctions such as at crossroads of streets with buildings, and significant losses may occur such as noticing the mistake after walking several meters. In the present system, the confirming the direction using the building numbers (also displays the vending machines) is easy and is also effective in preventing any misunderstanding.

Furthermore, in this navigation system, the house numbers are not needed to be displayed in every building, for example, display predominantly on buildings that are along roads and at intersections, or may be omitted as necessary within the range needed for location confirmation by displaying fewer numbers in a dense residential area.

Furthermore, in this system, even if the GPS function cannot be used in the event of a disaster, safe guidance will be provided to the evacuation site and evacuation route with the house map feature. Furthermore, when an emergency alert is received, irrespective of whether the navigation system is in use or not, automatically displaying a map centered around the current location at that time is sufficient.

Moreover, in this navigation system, the arrangement of features and buildings spread on the surface of the earth can be visually judged based on the building number displayed on the map and the mutual analog phase relation making it possible to extract the superior graphics processing ability of humans (which the machines can never achieve), to produce an efficiency that is better than conventional navigation systems its use in disaster prevention learning and strolling access to tourist information.

In the invention mentioned above, the map data has topography, map and buildings displayed as diagrams, letters, and figures on coordinates defined in terms of latitude and longitude. It is preferable that the said navigation system is equipped with a current location acquisition unit that acquires the current location, and a display information generation unit that displays the map data corresponding to the current location acquired by the current location acquisition unit, and displays the house numbers corresponding to the coordinate location of the building. In this case, combining of a natural coordinate system of latitude and longitude, and a social coordinate system of residential house numbers (or, in areas lacking house number designations display, lot number designations), and enable a user to freely utilize a social coordinate system in relation to the current location identified by GPS.

Moreover, it is preferable that the invention mentioned above has an additional information adding unit that displays the additional information associated with the house numbers by superimposing on the map data at the coordinates of the buildings. In this case, because the additional information is superimposed on the map data and displayed, additional information that is actually and potentially distributed over a wide range in the region is provided such that the people can understand with the destination with a bird's-eye view from the current location. Furthermore, in the invention mentioned above, it is preferable that the additional information is characterized by the disaster prevention information or tourism information associated with the house number. In this case, searching the disaster prevention, risk information and tourist attractions actually and potentially distributed over a wide range in the region freely, efficiently, and systematically is possible.

It is preferable that the invention mentioned above is further equipped with a information retrieval unit that retrieves Web information associated with the said house numbers using the house numbers as a keyword to search on the Internet, and an information classification unit that extracts predetermined character strings from the Web information acquired by the information retrieval unit, determines the attributes of the Web information from the appearance frequency of the extracted character strings, and associates the extracted attributes and house numbers, and stores by classifying the said Web information as additional information. In this case, since Web information is acquired as additional information, the user can be informed by extracting the various information displayed on the map more quickly. At this time, in the present invention, because predetermined character strings are extracted from the Web information, and the attributes of the Web information is determined from the appearance frequency of the extracted character strings, and the extracted attributes and house numbers are associated, and the said Web information is classified as additional information and stored, only the information required by the user can be displayed on the map data from among a lot of information, and this enables the convenience to be improved.

Moreover, it is preferable that the invention mentioned above is further equipped an input interface to acquire the user operation to select the house numbers on the map displayed by the display information generation unit, and a current location correction unit that acquires the coordinates associated with the house numbers selected in the input interface from the map data storage unit, and based on the acquired coordinates requests modification of the current location to the current location acquisition unit and executes the correction of the displayed map data.

In this case, for example, even when an error occurs due to the positioning accuracy of the GPS receiver and impact of the environment in which the positioning is performed because accurate location information can be obtained by operation from the user, and error in the location information obtained from the satellite can be eliminated, and by using the correction information of the error, the information can be incorporated to improve the accuracy of the subsequent positioning calculation. Specifically, in the present invention, coordinates associated with the house numbers are stored in the map data storage unit, and because the current location is corrected based on the selected house number, the correction process can be carried out in real time and easily. Moreover, in the present invention, the house numbers are displayed on the map shown by the display information generation unit, and the displayed house numbers are selectable, this makes it possible to immediately recognize the difference between the location where one is present, and the location on the map and the correction action can be taken intuitively.

### [Effects of the Invention]

In conventional systems, in addition to the error range of the GPS, there was almost no key for location collation with the actual site because of which it was not easy to specify the exact location on the map and the site. In this system, by collation with the building address displayed everywhere on the site, identifying the correct location easily became possible. The current location identification function of the GPS, by enabling individual walking choices such as determining the route at junctions that depend on site collocation of building numbers instead of roughly identifying the position, made the realization of a navigation system that is efficient and stress free possible.

In the conventional system, if there are multiple delivery locations in one of the region, the delivery destinations have to be entered one by one and is complicated. In this system, the delivery destinations can be specified easily by confirming the building numbers on the maps taking advantage of the superior analog processing capability of humans, and the rough direction and shortest route from the current location can be determined.

### [Brief Description of the Drawings]

[Fig. 1] Screen configuration of the user terminal 1 used in the survey (bird's-eye)-type navigation system related to this embodiment.
[Fig. 2] Conceptual diagram showing the overall configuration used in the survey (bird's-eye)-type navigation system related to this embodiment.
[Fig. 3] Block diagram showing the internal configuration of the administration server related to this embodiment.
[Fig. 4] Block diagram showing the internal configuration of the user terminal related to this embodiment.
[Fig. 5] Block diagram showing the internal configuration of the additional information adding unit related to this embodiment.
[Fig. 6] Explanatory diagram showing the additional information selection screen displayed in the display unit related to this embodiment.
[Fig. 7] (a) and (b) are the explanatory diagrams showing the display form of the map data related to this embodiment.
[Fig. 8] Flowchart showing the map data creation process in the survey (bird's-eye)-type navigation method related to this embodiment.
[Fig. 9] Flowchart showing the map data display process in the survey (bird's-eye)-type navigation method related to this embodiment.
[Fig. 10] (a) and (b) are the explanatory diagrams showing the function to correct the current location that is related to this embodiment.
[Fig. 11] Block diagram showing the basic internal configuration of the user terminal related to this embodiment.

### [BEST MODE FOR CARRYING OUT THE INVENTION]

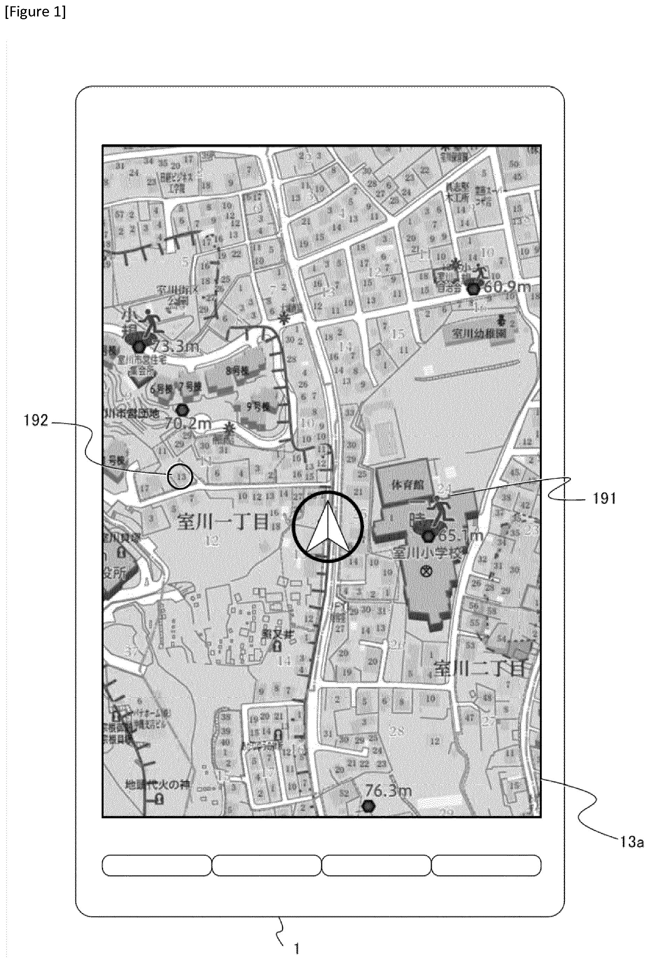

The embodiment of the survey (bird's-eye)-type navigation system is described in detail with reference to the below attached drawings. Figure 1 is the screen configuration of the user terminal 1 used in the survey (bird's-eye)-type navigation system related to the present embodiment. As shown in Figure 1, the user terminal 1 is provided with a navigation system for displaying map data that corresponds to a current location; wherein house numbers are displayed over buildings in the map data on display 13 a.

This map data has topography, map and buildings displayed as diagrams, letters, and figures on coordinates defined in terms of latitude and longitude. Moreover, on the map, roads, and building display contours (polygons) that represent the buildings standing along the roads and, house number 192 inside the building display contours are displayed. That is, in this map data, the natural coordinate system of latitude and longitude and a social coordinate system of residential house numbers (or, in areas lacking house number designations display, lot number designations) are combined and displayed.

Moreover, on the map data, additional information 191 such as disaster prevention information or tourism information associated with the house numbers and web information related to the house numbers searched on the Internet can be displayed. This additional information is various information such as the disaster prevention, risk information and tourist attractions actually and potentially distributed over a wide range in the region. In the map data, this additional information 191 is superimposed on the map data and displayed at the location corresponding to the coordinates of the buildings.

Moreover, on this map data, in addition to display of administrative divisions of municipalities, the official names of roads, shops and tourist spots are displayed for some road names and predetermined places along with the display of names of the main intersections. Furthermore, symbols such as symbols representing post office, Shinto shrines, and temples can also be displayed on the map.

### (Overall configuration of the survey (bird's-eye)-type navigation system)

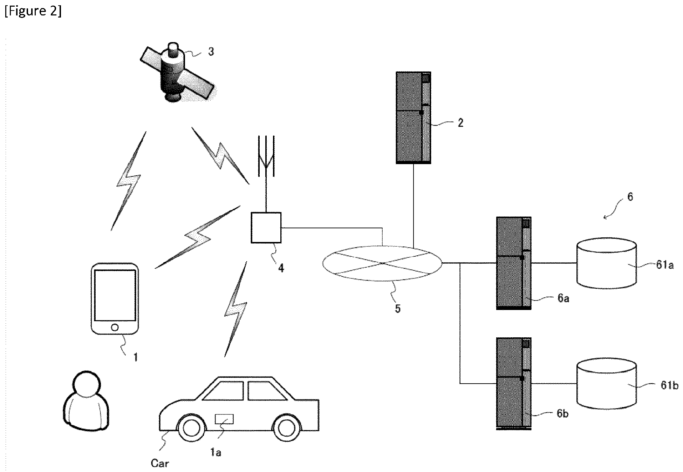

The survey (bird's-eye)-type navigation system that displays the map data described above will be described. Figure 2 is the conceptual diagram showing the overall configuration used in the survey (bird's-eye)-type navigation system related to this embodiment. As shown in Figure 2, the survey (bird's-eye)-type navigation system according to the present embodiment is a system that displays the map data corresponding to the current location with the administration server 2 that manages this system, radio base station 4, various Web servers 6 (6a and 6b) that distribute various Web data, user terminal 1 (includes car navigation device 1a that can be mounted in cars) capable of wireless communication via the radio base station 4 or communication satellite 3 are arranged in on the communication network 5.

Communication network 5 includes a wireless communication network, and is a distributed communication network constructed by mutually connecting a variety of communication lines (telephone lines or ISDN lines, ADSL lines, public lines such as optical line, dedicated lines, and wireless communication networks) using the TCP/IP communication protocol to each other. This communication network 5 also includes an intranet (a network within a company) based on 10BASE-T or 100BASE-TX and LAN such as a home network.

The radio base station 4 is a device that is connected to the communication network 5 through the relay device, and establishes a wireless communication with the user terminal 1, and offers voice or data communication with user terminal 1. The relay device is a node device such as a modem, terminal adapter, or gateway device for connecting to the communication network 5, and selects the wireless route, performs mutual conversion of the data (signals), and performs relay processing between the radio base station 4 and communication network 5. This relay device, also includes the functions of Wi-Fi (registered trademark) router or access point device, and performs the wireless communication with user terminal 1. Satellite 3 is a location information satellite orbiting in a predetermined orbit over the earth, and transmits navigation messages to the earth by superimposing on the 1.57542 GHz radio wave (L1 wave).

The administration server 2 is arranged on the communication network 5, and is a server device that manages and controls the entire system such as user management, and data collection management. Moreover, the administration server 2 includes a Web server and is a server computer or software with that function, which performs the transmission of information such as HTML (Hypertext Markup Language), image, and music files through the WWW (World Wide Web), stores information such as HTML documents and images, and transmits the distribution contents (Web pages) to user terminal 1 based on the demand of applications such as Web browser running on the user terminal 1.

User terminal 1 is the terminal possessed by each user, mobile phones with a radio communication function, smart phones, and car navigation device having the arithmetic processing function of the CPU and radio communication function, communicates wirelessly with a relay point such as a general base station, and can receive communication services such as call and data communication while moving. FDMA system, TDMA system, CDMA system, W-CDMA, and others such as PHS (Personal Handyphone System) system can be cited as examples for the communication methods of the mobile phone. Moreover, it is equipped with the function of sending and receiving IP packets conforming to the standards of wireless LAN that support the communication method as a wireless interface besides the communication method mentioned above. Furthermore, the user terminal 1 is equipped with functions such as digital camera function, execution function of application software, and GPS function, and also functions as a personal digital assistant (PDA).

Web server 6 (6a, 6b) is a server computer or software with that function, which performs information transmission of HTML, image, and music files through document systems such as WWW (World Wide Web), stores information such as HTML documents and images in database 61a, 61b, and transmits this information through the IP network of Internet 5 based on the request of client software such as the Web browser. This Web server 6 also includes social network servers (SNS) that share content among users based on access restrictions by setting mutual access restrictions among users individually, various information such as tweets and comments posted on the said SNS system can be displayed on the screen of the user terminal 1.

### (Internal structure of each device)

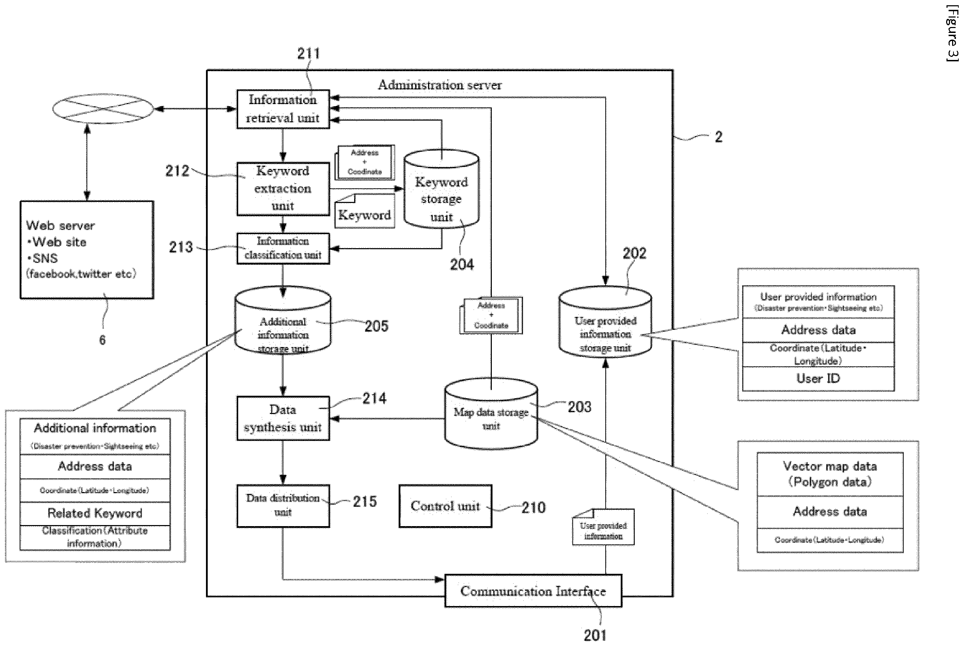

Next, the internal structure of each device that makes up the system described above will be described. Figure 2 is the block diagram showing the internal configuration of the user terminal 1 related to the present embodiment. Figure 3 is the block diagram showing the internal configuration of the administration server 2 related to the present embodiment. Moreover, the term "Module" used in the description is configured from hardware such as devices and equipment, or software having that function, or by a combination of these, and is a functional unit to achieve a predetermined operation.

### (1) Administration server

Next, the internal configuration of the administration server 2 will be described. The administration server 2 can be configured from a single server or multiple Web servers and database servers. The present embodiment, as shown in figure 3, is equipped with a communication interface 201 as the functional mode for communication processing. The communication interface 201 is a communication interface that transmits and receives data between the user terminal 1 and Web server 6 via the communication network 5.

Moreover, administration server 2 has a map data storage unit 203 as a module for the storing map data to be displayed on the user terminal 1. The map data storage unit 203 is a recording device to store the data of the electronic residential map with address, stored data is the coordinate data latitude and longitude, and vector map data for the coordinate data (polygon data), and address data (house number) corresponding to the coordinate data are recorded by association. The map data displayed on the screen by this has topography, map and buildings displayed as diagrams, letters, and figures on coordinates defined in terms of latitude and longitude along with house number 192 inside the buildings. Moreover, such map data may be generated on the administration server 2. In this case, the figures of the map is created using the original image, image scanner, vector data conversion device, polygon (polygonal enclosed graphics) conversion device, and computer, and the said house number data and part of the name (text data) is either added by manually entering at the location corresponding to the coordinates on the map, and in case the coordinate information is included in the house number data and part of the name (text data) beforehand, linked to the map data on the basis of the coordinate data. Furthermore, at this time, the house numbers that appear on the map are modified appropriately to fit the building contour.

Moreover, the administration server 2 has a user provided information storage unit 202 as a module to acquire and store the information sent by each user. The user provided information storage unit 202 is a recording device that acquires various types of information sent from the user terminal 1 and stores the said information. The information provided, for example includes various information such as information on disaster prevention and sightseeing. Here, information related to disaster prevention includes topography and elevation in the vicinity of homes and schools, evacuation sites, evacuation routes, dead ends, buildings of 3 or more floors, buildings, block fences, and vending machines that are at risk of collapse, parts of the roads that are in danger of collapse, locations that can easily become ditches when inundated, and areas at risk of fire conflagration.

Moreover, information related to tourism includes opening hours of tourist spots and cultural assets, and information on the tourist spots and cultural assets themselves such as crowd status during each time zone, and additionally information on the business hours, ratings, and crowd status of the stores (Restaurants, and souvenir shops) in the vicinity of the tourist spots and cultural assets. In addition, as information related to SNS systems, for example, ratings of restaurants, guest houses, and featured products. This information along with the house numbers or the coordinates affixed will have the user ID of the person who has posted the information.

The house numbers or coordinates of the user-provided information, for example, if the posted images includes coordinate data, the location is identified from that coordinate data, also, if the coordinates were acquired at the time of posting, the location is identified from the coordinate data. Moreover, if the comments contain keywords related to the address (example, ____ station), then the location is identified from the keyword. Then, the user provided information storage unit 202 acquires information about disaster prevention and tourism, address data (house number) of the location, coordinate data, and user ID which is the identification information to identify the user who has provided the coordinate data from the user terminal 1 and stores this information.

Moreover, the administration server 2 is equipped with the keyword storage unit 204, additional information storage unit 205, information retrieval unit 211, keyword extraction unit 212, information classification unit 213, data synthesis unit 214, and a data distribution unit 215 as the module group that relates the additional information to the map data.

The information retrieval unit 211 is a module that searches the information in each of the storage unit as a search keyword, and acquires the Web information or the user-provided information relevant to the search keywords as additional information. In the present embodiment, the information retrieval unit 211 acquires the Web information from house numbers included in the map data of the map data storage unit 203, and user-provided information from the user provided information storage unit 202.

In case of acquiring the Web information from the house numbers included in the map data of the map data storage unit 203, house numbers in the map data are used as search keywords to search on the Internet, and the Web information related to the said house numbers are acquired as additional information. From this, for example, in that address, whether there is a shelter, whether there is a tourist spot, whether there are accommodations such as hotels, or whether there is a hospital becomes clear.

Here, Web server 6 that is searched by the information retrieval unit 211 consists of various types of Web servers, and the present embodiment includes servers delivering information related to disaster prevention, servers delivering urban planning information, servers delivering information on restaurants and guest houses, servers delivering information on cultural assets and battlefields, servers delivering information on hospital and long-term care, servers delivering barrier-free information, servers delivering information on special products such as tourism farms, and servers delivering information on store information such as restaurants. Moreover, includes servers of SNS systems such as Facebook and Twitter.

On the other hand, when searching for predetermined information from the user provided information storage unit 202, the string of the comments provided, the address location included in the user-provided information, or the coordinates are extracted. Then, the retrieved Web information or user-provided information is input to the keyword extraction unit 212. Furthermore, in the information retrieval unit 211, although the retrieval order of the map data storage unit 203 and user provided information storage unit 202 is arbitrary, it is preferable that first the Web information is acquired from the house numbers included in the map data, and then user-provided information is searched. As a result, for example, after it is determined by the Web search that the location is an evacuation site, detailed information can be linked from comments on the evacuation site based on the user-provided information.

Keyword extraction unit 212 is a module that extracts information such as keywords from the additional information (Web information or user-provided information) acquired by the information retrieval unit 211. If the keyword is a character string, for example, along with extracting the keyword by morphological analysis from the text to be included in the content and delivery information, characteristic words are extracted with TF-IDF (Term Frequency - Inverse Document Frequency) as content keywords. Furthermore, this extraction keyword can be a house number or evacuation facility name, tourist spot name, shop name and comments (ratings) tagged to each of the above-mentioned names. Moreover, for example, in the case of using the image data, the coordinate data included in the image data can be extracted as keywords. In addition, the method of keyword extraction may use various techniques not limited to the method described above.

The keyword storage unit 204 is a database for storing keywords extracted by the keyword extraction unit 212, here, the extracted keywords are stored by adding address data and coordinate data.

The information classification unit 213 is a module that extracts predetermined character strings from the Web information or the user-provided information acquired by the information retrieval unit 211, and determines the attributes of the Web information from the appearance frequency of the extracted character strings, associates the extracted attributes and house numbers, and classifies and stores the said Web information as additional information. In the present embodiment, to determine the attributes of the Web information from the appearance frequency of the character string (keyword) extracted by the keyword extraction unit 212. For example, if the character string "Shelter" is included multiple times, classifies the keyword as an attribute related to disaster prevention, and for example, if the character string "Hotel" is included multiple times, classifies the keyword as an attribute associated with tourism.

Here, the classification fields to be classified includes "Disaster prevention", "Urban planning", "Tourism", "Accommodations", "Cultural assets and battlefields", "Hospital and long-term care", "Barrier-free", "Nature and the environment", "Specialty products" and "Restaurants" described above, and others can be divided into various fields such as "Property tax" showing the fixed asset tax of each land, "Timetable" showing the time of piers, railways, and buses, "Surveillance camera" indicating the location of the security cameras, "Water supply and sewage system", "Shopping mall information" showing the information for each store in the mall, fishing spots, "Service information" indicating certain facilities such as beauty salons, "EV installation location" indicating the places where elevators are installed, "Toilet" indicating the locations of toilets, "Park" showing the parks, "AED location" showing the AED locations ", "Parking lot" indicating vehicle parking, "School" showing the schools, and "Event" indicating event information.

The additional information storage unit 205, is a database that stores the Web information or the user-provided information acquired by the information retrieval unit 211, keyword extraction unit 212, and information classification unit 213 as additional information. In the present embodiment, name of the additional information, address data, coordinate data, keywords of the said additional information, and classification (attribute information) is stored in the additional information ID that specifies the additional information.

The data synthesis unit 214 is a module for associating each data stored in the additional information storage unit 205 and the map data storage unit 203. The data synthesis unit 214 by associating the address data or coordinate data in the additional information storage unit 205 and the address data or coordinate data in the map data, enables the display of the additional information on the map data.

Furthermore, in the present embodiment, the information retrieval unit 211 using the keyword recorded in the keyword storage unit 204 has a function to search the Internet 5 up or user provided information storage unit 202 again, and acquires the information that was searched again as additional information. For example, when an evacuation site is searched using the address number when a disaster occurs and the name of the evacuation site is extracted as a keyword, by again searching again using the name of the evacuation site as a keyword, posts (For example, comments mentioning that buildings are at risk of collapse, comments on sections of roads that are submerged, comments such as places that are likely to slide into the ditches on the sides when flooded, and comments on areas with fire hazard) of users regarding the evacuation site can be added as additional information.

Moreover, for example, if tourist spots are retrieved from house numbers, by searching again using the name of the tourist spot as a search keyword, if there is information such as restaurants and souvenir shops or a good shooting spots in the vicinity of tourist spots, then the information can be added to the information of tourist spots. Thus, in the present embodiment, by searching again with the extracted keywords, various Web information, and user-provided information derived from the keyword can be acquired, information that the citizens themselves can find while walking and exploring the actual sites closely for the first time can be added as a common information.

The data distribution unit 215 is a module for delivering the synthesized map data to user terminal 1. In the present embodiment, each data stored in the map data storage unit 203 and additional information storage unit 205 is distributed by associating with the house number.

Moreover, each of the above module provided in the administration server 2 is controlled by the control unit 210. The control unit 210 is a calculation module configured from processors such as a CPU or a DSP (Digital Signal Processor), memory, and hardware such as other electronic circuits or software such as a program having these functions, or configured by a combination of these. Various function modules are virtually constructed by appropriately reading and executing the program, operation control of different units and various processing for user operations are performed with each of the functional modules that have been constructed.

### (2) User terminal 1

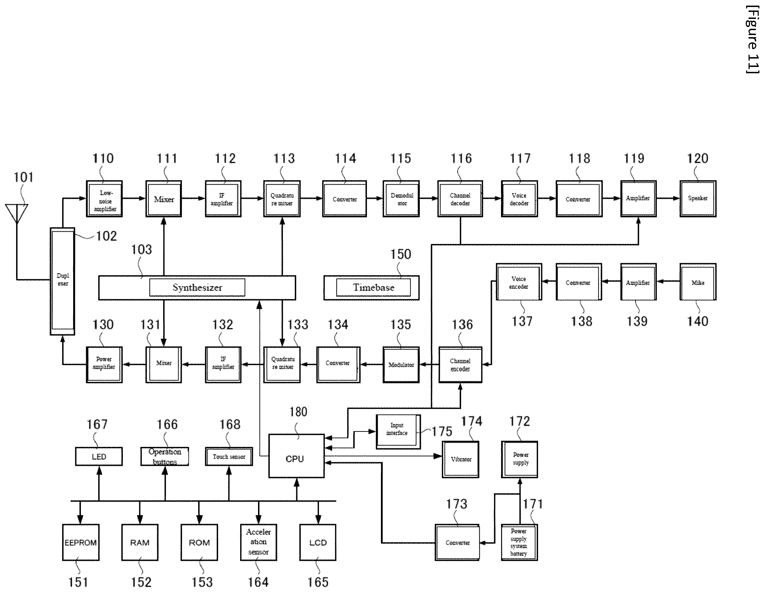

Next, the internal configuration of the user terminal 1 will be described. First, the basic internal configuration of the user terminal 1 will be described. Figure 11 is the block diagram showing the internal configuration of the mobile communication terminal 1 related to the present embodiment. As shown in the figure, the mobile communication terminal 1 is equipped with a duplexer 102 connected to an antenna 101, and receiving system module and transmission system module connected to the duplexer 102 module.

The receiving system module is equipped with a low-noise amplifier 110, mixer 111, IF amplifier 112, quadrature mixer 113, A/D converter 114, demodulator 115, channel decoder 116, audio decoder 117, D/A converter 118, amplifier with switch 119, and speaker 120. On the other hand, the transmission system module is equipped with a mike 140, amplifier 139, A/D converter 138, audio encoder 137, channel encoder 136, modulator 135, D/A converter 134, quadrature mixer 133, IF amplifier 132, mixer 131, and power amplifier 130.

Moreover, the mobile communication terminal 1 is equipped with synthesizer 103, timebase 150, CPU 180, RAM 152, ROM 153, EEPROM 151 as the control system module, acceleration sensor 164, LCD 165, operation buttons 166, LED 167, touch sensor 168, and vibrator 174 as the user interface system module, and furthermore, equipped with the power supply system battery 171, power supply 172 and the A/D converter 173 as the power supply system.

The antenna 101 mentioned above transmits and receives signals with the base station (not shown) via radio wave circuit. The duplexer 102 is a circuit to switch the input/output of the signals transmitted and received, the signal received by antenna 101 is input to the low-noise amplifier 110, and outputs the signal output from power amplifier 130 to antenna 101.

The low-noise amplifier 110 in the receiving system module amplifies the signal input from the duplexer 102, and outputs to mixer 111. The mixer 111, receives the output of the low-noise amplifier 110, and outputs it as an intermediate frequency signal separated by only a certain frequency. The IF amplifier 112 amplifies the intermediate frequency signal output from mixer 111. The quadrature mixer 113 receives the output of the IF amplifier 112 and performs orthogonal demodulation. The A/D converter 114 performs digitization of the output from quadrature mixer 113. The demodulator 115 demodulates the output of A/D converter 114. The channel decoder 116 performs error correction on the output of the demodulator 115. The signal subjected to error correction include control messages and audio data. The control message is sent to the CPU 180, and the audio data is sent to the audio decoder 117.

The signals input from this channel decoder 116 to the audio decoder 117 is decoded into audio data and passed to the D/A converter 118. The D/A converter 118 converts the output of audio decoder 117 into an analog signal. The amplifier with switch 119, is switched at an appropriate timing based on the control signals from the CPU 180, and amplifies the output of the D/A converter 118 in the switch ON status. The speaker 120 amplifies the output of the amplifier 119 with switch.

On the other hand, the microphone 140 receives an audio signal from the user through the transmission system module, and outputs the audio signal as an analog signal. The amplifier 139 amplifies the analog signal output from mixer 140. The A/D converter 138 converts the output of the amplifier 139 into a digital signal. The audio encoder 137 encodes the output of the A/D converter 138, compresses, and outputs as audio data. The channel encoder 136 matches the control message from CPU 180 and the voice data from the audio encoder 137, and adds an error correction code.

Then, the modulator 135 modulates the output of the channel encoder 136. The D/A converter 134 converts the output of modulator 135 into an analog signal. The quadrature mixer 133 converts the output of the D/A converter 134 to IF frequency signal (intermediate frequency signal). The IF amplifier 132 amplifies the output of quadrature mixer 133. The mixer 131 increases the frequency of the signal output of the IF amplifier 132. The power amplifier 130 amplifies the output of mixer 131.

Moreover, the said synthesizer 103 synchronizes mixer 111, quadrature mixer 113, mixer 131, and quadrature mixer 133 during communication. The timebase 150 supplies the clock signal to each unit.

The acceleration sensor 164 is a sensor for detecting the magnitude and direction of acceleration in the user interface system. The LCD 165 is a liquid-crystal display that displays messages and input sentences to the user. In the GUI on the touch panel, graphics of characters, figures, and video can be displayed through LCD 165, and acquires the operation signal through the touch sensor 168 on the touch panel.

The LED 167 intends to convey a message to the user by turning on and off. The touch sensor 168 detects the touch of the user's finger on the touch panel surface and acquires the operation signal by the pressure on the touch panel surface. The vibrator 174 is a device to notify an incoming call, and vibrates on receipt of a call.

Moreover, the power supply system battery 171 supplies power to the power supply 172 and A/D converter 173. The power supply 172 is the power supply for mobile communication terminal 1. A/D converter 173 supplies a signal to CPU 180.

CPU 180 is an arithmetic processing device that controls the above units, and performs various functions by executing the commands of the programs saved in ROM 153. RAM 152 is used as the working memory of CPU 180, and temporarily stores the calculation results of CPU 180. Various function programs and its data for CPU 180 are recoded in ROM 153, and sequentially outputs the execution instructions of the program in response to the requests from the CPU 180.

The user data of speed dialing, machine-specific ID and telephone number, information of the menu icon, and the display information are recorded in EEPROM 151. In this menu icon, the various functions and data of the information processing device are associated and arranged in a matrix on the screen depending on the attributes of the function and data.

Then, in the present embodiment, by running software such as the navigation program of the present invention with CPU 180, various modules are built virtually on CPU 180.

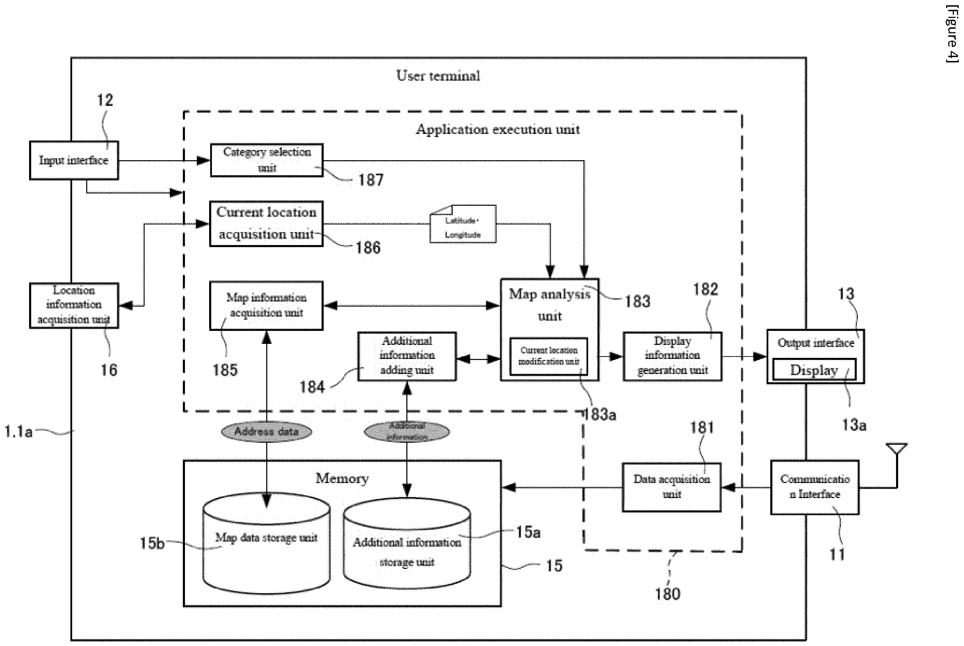

Next, the internal configuration of the user terminal 1 when the navigation program is run will be described. As shown in Figure 4, the user terminal 1 is equipped with a communication interface 11, memory 15, application execution unit 180, output interface 13, input interface 12, and a location information acquisition unit 16.

Communication interface 11 is equipped with the function to run wireless communication based on protocols for mobile communication to make calls, and for example, wireless communication based on protocols for data communication such as wireless LAN, and can be connected to public mobile telephone networks such as 4G line, LET line, 3G line, PHS and other high-speed data communication network. Specifically, the communication interface 11 is a transceiver complying with IEEE 802.11b in order to perform wireless LAN connections and can be implemented with wireless LAN in a mobile computer or PDA. This communication interface 11 is also equipped with a relay device that is a Wi-Fi router and a function for wireless communications with Wi-Fi system (registered trademark).

The input interface 12 is a device to input user operations such as operation buttons and touch panel. Moreover, the output interface 13 is a device to output video and sound to the display or speaker. Specifically, this output interface 13 includes the display unit 13a such as a liquid crystal display (LCD). Display unit 13a is a display that is configured from the above-mentioned LCD 165 and the touch sensor 163. Memory 15 is a recording device to records the OS (Operating System), programs for various applications, and other data, and is configured from EEPROM 151, RAM 152, and ROM 153. In memory 15, additional information storage unit 15a that records various information stored in additional information storage unit 205 of the administration server 2, and map data storage unit 15b that records various information stored in map data storage unit 203 of the administration server 2 are associated and stored.

The location information acquisition unit 16 is a module to acquire and record the location information that indicates the current location of the device, for example, in the same way as GPS (Global Positioning System), detects the location of the device with the signals from satellite 3 or detects the location based on the radio field intensity from the radio base station 4. The monitoring location information is coordinate data that can be specified by the map information, and is transmitted to the application execution unit 180.

The application execution unit 180 is a module for executing applications such as general OS and browser software, it is usually realized by a CPU, and is similar to the CPU 180 described above. By executing the program of this system with the application execution unit 180, data acquiring unit 181, display information generation unit 182, map analysis unit 183, additional information adding unit 184, map information acquisition unit 185, current location acquisition unit 186, and category selection unit 187 are constructed.

The data acquisition unit 181 is a module that receives various data from the administration server 2. In the present embodiment, additional information of the additional information storage unit 205 that is linked by the data synthesis unit 214 and the map data stored in the map data storage unit 203 are acquired and respectively recorded in memory 15.

The current location acquisition unit 186 is a module for acquiring the current location of user terminal 1, via location information acquisition unit 16, for example, based on the GPS signal from satellite 3, the location information of the device can be acquired by calculating the coordinates of the current location. The acquired coordinate data is entered into the map analysis unit 183 by the current location acquisition unit 186.

The map information acquisition unit 185 is a module that acquires map data that includes the current location from the map data storage unit 15b based on the coordinates acquired by the current location acquisition unit 186. Furthermore, this map information acquisition unit 185 functions based on to the control from the map analysis unit 183 and is executed by acquiring the operation signal for acquiring current location from input interface 12.

The additional information adding unit 184 is a module that displays the additional information associated with the house numbers by superimposing on the map data at the coordinates of the buildings. In the present embodiment, based on the house numbers or the coordinates data in the map data extracted by the map information acquisition unit 185, additional information in the additional information storage unit 15a is extracted. Furthermore, when the attribute of the additional information is selected by the user's operation, the additional information added unit 184 extracts only the additional information that has the selected attribute information.

Moreover, in the present embodiment, when user groups have been created, applying restrictions such as allowing the user-provided information to be displayed only on terminals having the user ID of the corresponding group. In this case, memory 15 already has user IDs of other people who form the group. Furthermore, a display restriction check is input to the data in the additional information acquisition unit 15a, and a user ID for specifying the range to be disclosed is linked. Then, the additional information added unit 184 determines if there is any display restriction when extracting the additional information, and if display restrictions are in place, the user ID of the terminal and user ID with display permission in the data are compared and decision whether or not to show the information is made.

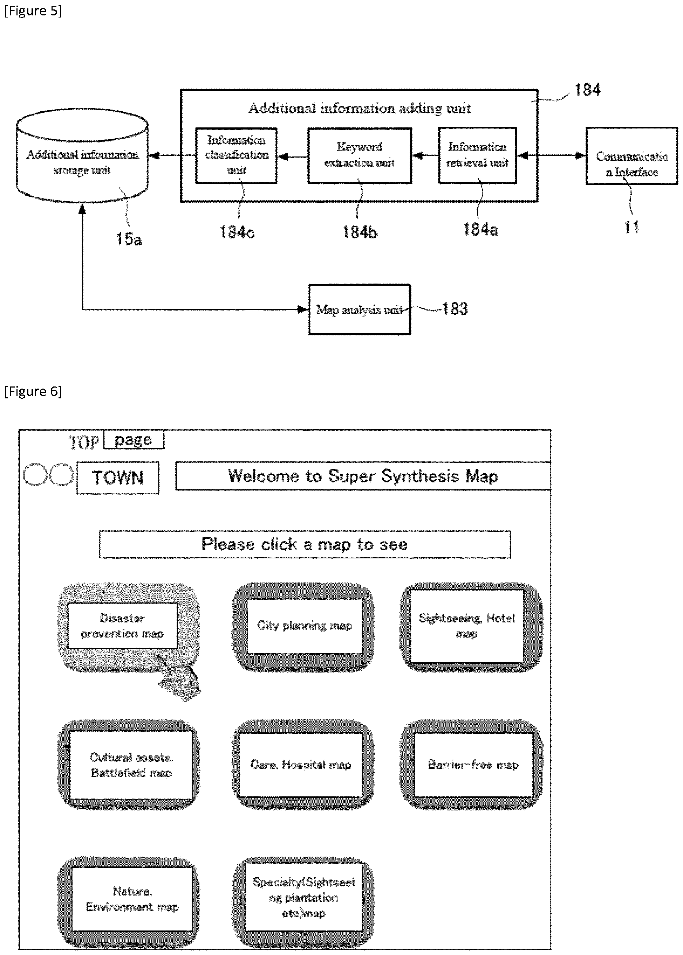

The category selection unit 187 is a module for determining the selected category based on the user operation. In the present embodiment, as shown in Figure 6, icons for each category is displayed on the screen of the display unit 13a. Here, icons related to disaster prevention, icons related to urban planning information, icons related to restaurants and guest houses, icons related to cultural assets and battlefields, icons related to hospital and long-term care, icons related to barrier-free information, icons related to nature and environment information, and icons related to special products such as tourism farms are displayed. Moreover, information posted on SNS systems such as Facebook and Twitter can be displayed. Then, if any of the icons is selected by user operation, the operation signal is acquired, and determined as an attribute of the additional information to be displayed on the map. The determined attribute information is entered into the map analysis unit 183.

The Map analysis unit 183 is a module for analyzing the map data relating to the current location, and performs the operation of displaying the map on the screen based on the used operation, and analyzes and determines all the information that has to be displayed on the map by controlling the category selection unit 187, current location acquisition unit 186, map information acquisition unit 185, and additional information adding unit 184.

Specifically, first, when an operation signal by a user operation is acquired to display map data on the display unit 13a, current location acquisition unit 186 is controlled so that it acquires the current location information. The coordinate data (latitude and longitude) of the current location is acquired from the current location acquisition unit 186, next, the coordinate data is transmitted to the map information acquisition unit 185 along with controlling the map information acquisition unit 185 to extract the map data of a predetermined range that includes the coordinate data and from the map data storage unit 15b.

After the map data has been acquired, the map analysis unit 183 sends the address data included in the map data to the additional information adding unit 184 and controls the additional information adding unit 184 to extract the additional information associated with the house numbers are included in the address data from the additional information storage unit 15a and to superimpose on the map data at the coordinates of the buildings. Furthermore, if the selected attribute information has been acquired from the category selection unit 187, then it is controlled to extract only the additional information in the attribute information. The extracted map data and additional information are transmitted to the display information generation unit 182.

Display information generation unit 182 is a module that displays the map data corresponding to the current location acquired by the current location acquisition unit 186 along with displaying the house numbers corresponding to the coordinate location of the buildings. Display information generation unit 182, as shown in Figure 1, on the screen of the user terminal 1, displays the contours of roads, and buildings polygons along with displaying the house numbers inside the polygons. Furthermore, on the screen, an icon 101 of evacuation site indicating evacuation sites is displayed as additional information. In this way, in the present embodiment, the layer of the house numbers and layers of attributes are superimposed on the map data and displayed on the screen.

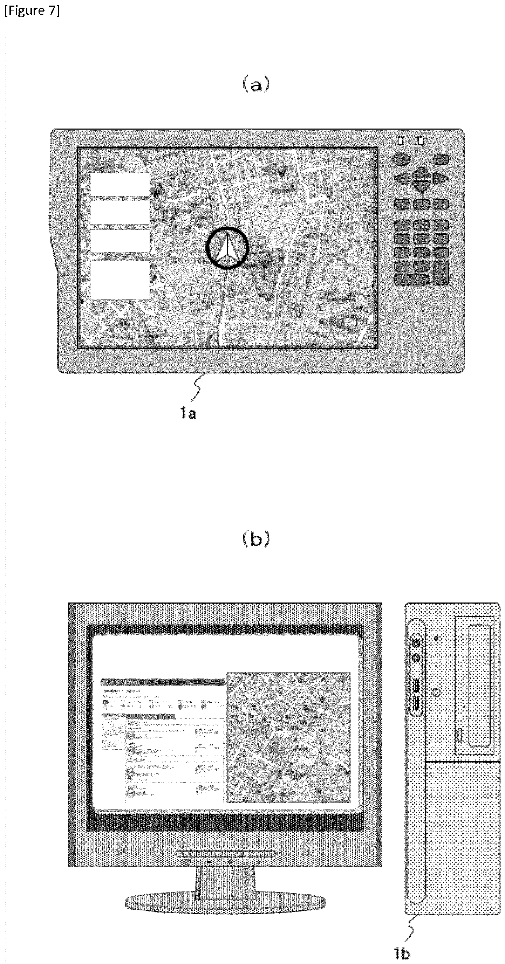

Moreover, as shown in Figure 7(a) and 7(b), in the display information generation unit 182, additional information can be displayed in a predetermined area of the screen. Here, Figure. 7(a) and 7(b) shows the examples in which map data is displayed on the screen of a car navigation device 1a or a personal computer 1b as user terminal 1 other than the mobile or smart phones, but display forms like these can also be displayed on the screen of the smart phones as shown in Figure 1.

For example, as shown in Figure 7(a), an additional information display area for displaying additional information on the map is displayed such that it can be pasted, and details of the additional information can be displayed within the said area. In this case, the information displayed in the additional information display area is the additional information including the house numbers on the map. Moreover, on the map, icons showing the location of the said additional information will be displayed.

For example, as shown in Figure 7(b), a map display area for displaying the map, and an additional information area for displaying the additional information can be separated and displayed. Here, the date information is also included, and the additional information for today's events is displayed in the additional information display area. Moreover, even here, on the map, icons showing the location of the said additional information will be displayed.

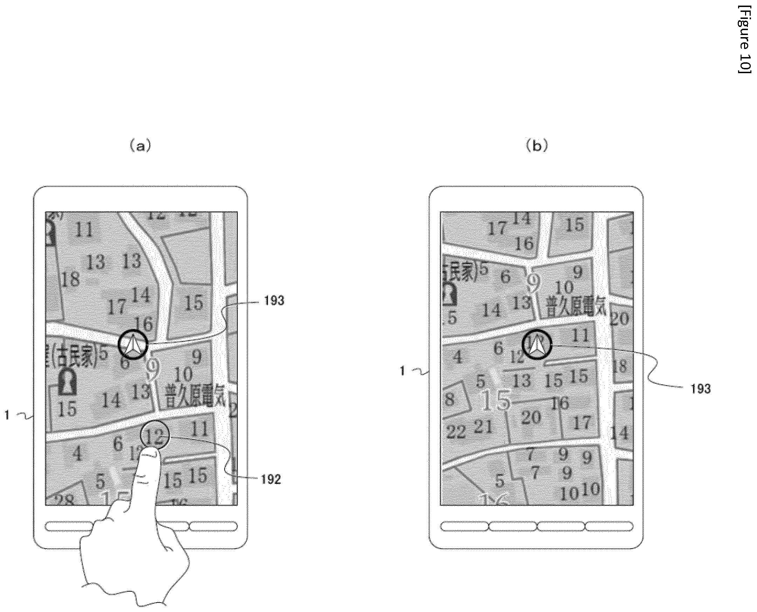

In the present embodiment, map analysis unit 183 has a current location correction unit 183a for correcting the location information acquired from satellite 3. That is, when the current location is acquired from satellite 3, there is a significant effect due to the positioning accuracy of the GPS receiver and the environment in which the positioning is performed giving rise to an error in the range of 10 m to 40 m. Therefore, in the present embodiment, as shown in Figure 10(a), by clicking on house number 193 (12 in the figure) on the map displayed on the display unit 13a, it is possible to change the location information with the selected house number as the current location.

Specifically, the current location correcting unit 183a based on the operations with input I/F12 such as touch panel selects (touch or click) house number 193 (12 in the figure) on the map displayed on the display unit 13a, acquires the coordinates (latitude and longitude) associated with the house numbers from the map data storage unit 15a, and requests for the correction of the current position to the current location acquisition unit 186 based on the acquired coordinates along with correcting the displayed map data. The current location acquisition unit 186, that is requested to correct the current location, corrects the error of the GPS positioning calculation and based on the correction information due to this error, incorporates the information to improve the accuracy of the subsequent positioning calculation.

Thereafter, in the map analysis unit 183, function modules ares controlled to display the icon 193 indicating the current location at the selected address as shown in Figure 10(b), and the display on the map is changed so that the address is located at the center of the screen. At this time, additional information is searched using all function modules for the address number newly added on the screen, and if additional information is available, it is displayed on the screen.

In the present embodiment, user terminal 1 side is equipped with a function to add user-provided information as additional information based on the information provided from another user terminal 1. Figure 6 is the block diagram showing the internal configuration of the additional information adding unit 184 related to the present embodiment. Specifically, the additional information adding unit 184 is equipped with an information retrieval unit 144a, a functional module similar to the information retrieval unit 211 of the administration server 2, a keyword extraction unit 144a, a functional module similar to the keyword extraction unit 212 in the administration server 2, an information classification unit 144c, a functional module similar to the information classification unit 213 in the administration server 2, and searches Internet 5 using the name, address data, and coordinate data stored in memory 15 as search keywords to acquire information related to the additional information. Furthermore, the acquired information can also be delivered to the administration server 2 as user-provided information.

### (Survey (bird's-eye)-type navigation method)

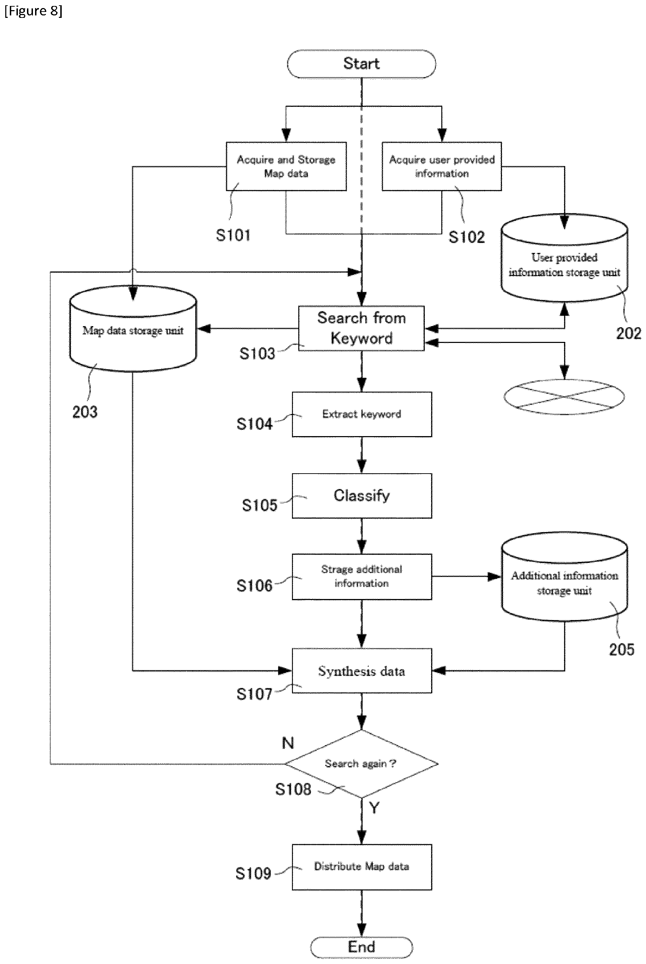

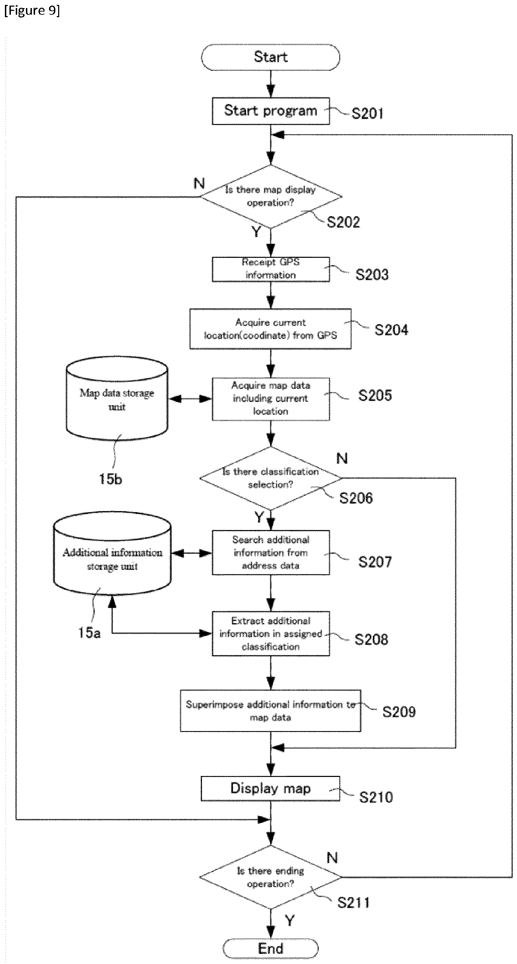

By operating the survey (bird's-eye)-type navigation system with the above configuration, survey (bird's-eye)-type navigation method can be implemented. Figure 8 is the flowchart showing the map data creation process in the survey (bird's-eye)-type navigation method related to this embodiment. Figure 9 is the flowchart showing the map data display process in the survey (bird's-eye)-type navigation method related to this embodiment.

### (1) Map data creation process

First, map data creation process will be described. As shown in Figure 8, the administration server 2 acquires the map data with the house numbers and stores this information in the map data storage unit 203 (S101). Moreover, in the present embodiment, map data with the house numbers have been obtained in advance, but for example, map data on which only administrative divisions are displayed can be acquired and the polygons of buildings can be converted, or the coordinates (latitude and longitude) or the house numbers can be associated with the map data and created in the administration server 2. Moreover, the administration server 2 acquires the user-provided information provided from the user terminal 1 via communication interface 201. Control unit 210 stores this information in the user provided information storage unit 202 (S102).

Thereafter, the information retrieval unit 211 searches a predetermined character string as a search keyword from the information stored in all storage units to acquire additional information S103. Here, the information retrieval unit 211 acquires the Web information from the house numbers included in the map data of the map data storage unit 203, and user provided information from the user provided information storage unit 202.

In case of acquiring the Web information from the house numbers included in the map data of the map data storage unit 203, the information retrieval unit 211 uses the house numbers included in the map data of the map data storage unit 203 as a search keyword to search on the Internet, and the Web information related to the said house numbers are acquired as additional information. Next, the retrieved Web information is transmitted to the keyword extraction unit 212. On the other hand, when the user provided information is searched from the user provided information storage unit 202, information retrieval unit 211 acquires the comment strings, address location or coordinates included in the user-provided information of the storage unit 202 and sends to the keyword extraction unit 212.

The keyword extraction unit 212 extracts (S104) information such as character strings that can be used as keywords from the Web information acquired by the information retrieval unit 211 or the user-provided information, and stores the said keywords along with the house numbers and coordinate data in the keyword storage unit 204. Next, the information classification unit 213 determines the attributes of the Web information or the user-provided information from the appearance frequency with the extracted character strings as keywords, associates the extracted attributes and house numbers, classifies the said Web information or the user-provided information as additional information (S105), and stores the classified additional information in the additional information storage unit 205 (S106).

Next, the data synthesis unit 214 when new additional information is stored in additional information storage unit 205, synthesis (associates) the data of both storage units (S107) based on the house numbers or coordinates included in the map data storage unit 203 and the house numbers or coordinates in the additional information storage unit 205. Then, information retrieval unit 211 using the keywords recorded in the keyword storage unit 204, determines (S108) whether to search Web information or user-provided information again, the process is repeated from step S103 to step S107 to search again ("Y" in S108). When the search again process ends beyond the predetermined search range ("N" in S108), data distribution processing is performed.

The synthesized data of map data storage unit 203 and additional information storage unit 205 is distributed by the data distribution unit 215 via the communication network 5 to each user terminal 1 (S108). Moreover, the delivery timing may be the timing at which new additional information is associated with the map data or performed at predetermined time intervals.

### (2) Map data display process

Next, the map data display process that is processed in user terminal 1 will be described. Moreover, here, data of map data storage unit 203 from administration server 2 is stored beforehand in memory 15 of user terminal 1, and data of additional information storage unit 205 is acquired and stored in memory 15.

First, when the application of survey (bird's-eye)-type navigation system is launched (S201) on application execution unit 180, application execution unit 180 monitors the user operation, and determines whether or not the map display operation has been performed (S202). The map display operation, for example, can be an operation of starting the navigation to a predetermined destination or can also just be the display of map data including the current location.

When there is no operation ("N" in S202) to display the map, while waiting, determines where there is a termination operation (S210). On the other hand, when there is an operation ("Y" in S202) to display the map, by the control of the map analysis unit 183, the current location acquisition unit 186 receives (S203) the GPS signal from satellite 3 via the location information acquisition unit 16 of user terminal 1, and acquires the current location (coordinate data) by calculating the coordinates of the current location (S204). The acquired coordinate data is entered into the map analysis unit 183 by the current location acquisition unit 186. Next, the map analysis unit 183 controls the map information acquisition unit 185 to acquire (S205) the map data that includes the current location from the map data storage unit 15b based on the coordinates acquired by the current location acquisition unit 186.

Thereafter, the map analysis unit 183 determines whether category selection was made by user operation (S206). If there is no category selection ("N" in S206), map data of the address including the current location is displayed S210. On the other hand, when category selection ("Y" in S206) has been performed, the attribute information selected from the category selection unit 187 is acquired, and the additional information adding unit 184 is controlled to acquire additional information including the selected attribute. Specifically, the additional information adding unit 184, based on the house numbers in the map data extracted by the map information acquisition unit 185, searches the additional information in the additional information storage unit 15a (S208) along with extracting the additional information that matches the selected attribute information in reference to the attributes in the said additional information (S209).

Then, the additional information adding unit 184 by the control of the map analysis unit 183, superimposes the additional information associated with the house numbers on the map data (S209), the display information generation unit 182 based on the map data and additional information displays the map data with address on the screen of display unit 13a along with displaying the additional information at the position corresponding to the coordinates of the building (S210).

Then, the application execution unit 180 acquires the current location from time to time, while acquiring map data and additional information to be displayed on the display unit 13a, and updates the map data that has to be displayed until there is an end operation (S203 to S210). On the other hand, quits the application when there is an end operation ("Y" in S211).

### (Actions/Effects)

In this way, according to the present embodiment, map data corresponding to the current location acquired by the current location acquisition unit 186 is displayed along with display of the house numbers corresponding to the coordinate location of the buildings. That is, in the present embodiment, natural coordinate system of latitude and longitude, and a social coordinate system of residential house numbers (or, in areas lacking house number designations, lot number designations) are combined to enable a user to freely utilize a social coordinate system in relation to the current location identified by GPS.

By that, as in the conventional systems, the effectiveness of the exploratory behavior not bound by "Unidirectionality" such as "Familiarity" of the destination or route setting to the destination is made possible using the house numbers as the key covering the destination on the navigation map with a bird's-eye view "Heuristic" and "360 degrees all directions". This means that the search capability, its radius of action, and degree of freedom in the local geographical space are greatly expanded and improved.

Specifically, in the present embodiment, the additional information adding unit 184 superimposes the additional information (disaster prevention information or tourism information) associated with the house numbers on the map data and displays at the position corresponding to the coordinates of the building. As a result, even if geographic locations such as evacuation sites and elevation, risk information, tourist spots, events of the region are not well known information, also, even if there are multiple information, they can be found out systematically at the same time in parallel in the field. As we have seen so far, getting lost on the way, tiredness due to too much effort, giving up before 1/10 of the goal has been achieved, and abandoning access will be eliminated.

In this way, by bringing about dramatic efficiency of exploratory behavior, the sense of accomplishment rewarding the effort will allow the users to become familiar with the geographical space of the area and use the survey (bird's-eye)-type navigation system of the present invention for "Pleasure of strolling". Moreover, the large degree of freedom of the action will allow the elderly, handicapped, children and pregnant women to find the information required by each, encounter with unexpected "Discoveries" giving temporal, psychological and physical comfort.

Furthermore, the above convenience is expected to make the following big contribution to the national task of "Disaster reduction". In other words, because of the convenience of the bird's-eye type navigation system, serves for tourism strolls in addition to the knowledge on the evacuation mobilization such as elevation above sea level, evacuation path of the region, and evacuation sites, and this connection with the actions is repeated and imprinted to the mind. As a result, besides lifelong learning and sightseeing of the region's history and historic sites, local disaster prevention and risk information is retained in the head as a map image, and will be helpful in giving shape to evacuation literacy that makes reflexive evacuation behavior possible when the information becomes critical.

In addition, the lot number designations of buildings used is universally common wherein the location information is written in "Numbers", which even children can understand. This navigation system can be easily used even by migrants, students, and foreigners who have no familiarity with the locality.

In conventional navigation systems, for example, when there are multiple alleys at intervals of 10 meters, the alley which one entered first cannot be detected with the GPS function because it is within the error range. In the present system, this information can be easily checked by displaying the address of buildings and vending machines, and one will not get lost or go out of the target direction.

In the conventional navigation system, to move by walking, the travel direction will not be clear at junctions such as at crossroads of streets, and significant losses may occur such as noticing the mistake after walking several meters. In the present system, the confirming the direction using the building numbers (also displays the vending machines) is easy and is also effective in preventing any misunderstanding.

Furthermore, in this survey (bird's-eye)-type navigation system, the house numbers are not needed to be displayed in every building, for example, display predominantly on buildings that are along roads and at intersections, or may be omitted as necessary within the range needed for location confirmation by displaying fewer numbers in a dense residential area. Furthermore, in this system, even if the GPS function cannot be used in the event of a disaster, safe guidance will be provided to the evacuation site and evacuation route with the house map feature.

Moreover, in this survey (bird's-eye)-type navigation system, the arrangement of features and buildings spread on the surface of the earth can be visually judged based on the building number displayed on the map and the mutual analog phase relation making it possible to extract the superior graphics processing ability of humans (which the machines can never achieve), to produce an efficiency that is better than conventional navigation systems its use in disaster prevention learning and strolling access to tourist information.

Moreover, in the present embodiment, because the information retrieval unit 211 searches the Internet with the house numbers as the keyword, and acquires the Web information as additional information of the said house number, it is possible to extract many types of additional information displayed on the map and inform the user. At this time, in the present embodiment, because predetermined character strings are extracted from the Web information acquired by the information retrieval unit 211, and the attributes of the Web information is determined from the appearance frequency of the extracted character strings, and the extracted attributes and house numbers are associated, and the said Web information is classified as additional information and stored, only the information required by the user can be displayed on the map data from among a lot of information, and this enables the convenience to be improved.

Furthermore, in the present embodiment, the address number can be selected with the input interface 12 in the map displayed by the display information generation unit 182. Then, the current location correction unit 183a acquires the coordinates associated with the house numbers selected with the input interface 12 from the map data storage unit 15b, and based on the acquired coordinates, requests the current location acquisition unit 186 to correct the current location, and executes correction of displayed map data. Therefore, even when an error occurs due to the positioning accuracy of the GPS receiver and impact of the environment in which the positioning is performed, the accurate location information can be obtained by operation from the user, error of the location information obtained from the satellite can be eliminated. Furthermore, the current location acquisition unit 186 by using the correction information of the error can incorporate the information to improve the accuracy of the subsequent positioning calculation.

Moreover, in the present embodiment, coordinates associated with the house numbers is stored in the map data storage unit 15b, and because the current location is corrected based on the selected house number, the correction process can be carried out in real time and easily. Furthermore, in the present embodiment, the house numbers are displayed on the map shown by the display information generation unit 182, and the displayed house numbers are selectable, this makes it possible to immediately recognize the difference between the location where one is present, and the location on the map and the correction action can be taken intuitively.

### [Explanation of Symbols]

- 1 ...: User terminal
- 1a ...: Car navigation device
- 1b ...: Personal computer
- 2 ...: Administration server
- 3 ...: Communication satellite
- 4 ...: Radio base station
- 5 ...: Communication network (Internet)
- 6 ...: Web server
- 11 ...: Communication Interface
- 12 ...: Input interface
- 13 ...: Output interface
- 13a ...: Display unit (Display)
- 14 ...: Application execution unit
- 15 ...: Memory
- 16 ...: Location information acquisition unit
- 61a ...: Database
- 101 ...: Antenna
- 102 ...: Duplexer
- 103 ...: Synthesizer
- 110 ...: Low-noise amplifier
- 111 ...: Mixer
- 112 ...: IF amplifier
- 113 ...: Quadrature mixer
- 114 ...: Converter
- 115 ...: Demodulator
- 116 ...: Channel decoder
- 117 ...: Voice decoder
- 118 ...: Converter
- 119 ...: Amplifier
- 120 ...: Speaker
- 130 ...: Power amplifier
- 131 ...: Mixer
- 132 ...: IF amplifier
- 133 ...: Quadrature mixer
- 134 ...: Converter
- 135 ...: Modulator
- 136 ...: Channel encoder
- 137 ...: Voice encoder
- 138 ...: Converter
- 139 ...: Amplifier
- 140 ...: Mike
- 150 ...: Timebase
- 151 ...: EEPROM
- 152 ...: RAM
- 153 ...: ROM
- 164 ...: Acceleration sensor
- 165 ...: LCD
- 166 ...: Operation buttons
- 167 ...: LED
- 168 ...: Touch sensor
- 171 ...: Power supply system battery
- 172 ...: Power supply
- 173 ...: Converter
- 174 ...: Vibrator
- 175 ...: Input interface
- 191, 192 ...: Icon
- 200 ...: CPU
- 181 ...: Data acquisition unit
- 182 ...: Display information generation unit
- 183 ...: Map analysis unit
- 184 ...: Additional information adding unit
- 184a ...: Information retrieval unit
- 184b ...: Keyword extraction unit
- 184c ...: Information classification unit
- 185 ...: Map information acquisition unit
- 186 ...: Current location acquisition unit
- 187 ...: Category selection unit
- 15a ...: Additional information storage unit
- 15b ...: Map data storage unit
- 201 ...: Communication Interface
- 202 ...: User provided information storage unit
- 203 ...: Map data storage unit
- 204 ...: Keyword storage unit
- 205 ...: Additional information storage unit
- 210 ...: Control unit
- 211 ...: Information retrieval unit
- 212 ...: Keyword extraction unit
- 213...: Information classification unit
- 214 ...: Data synthesis unit
- 215 ...: Data distribution unit

## Claims

1. A survey (bird's-eye)-type navigation system that is **characterized by** the display of map data corresponding to the current location with a navigation system **characterized by** house numbers displayed on the building in the said map data.

2. The said Survey (bird's-eye)-type navigation system according to Claim 1 that is **characterized by**,
equipped with
the said map data displays topography, map and buildings displayed as diagrams, letters, and figures on coordinates that are defined in terms of latitude and longitude,
the said Survey (bird's-eye)-type navigation system,
a current location acquisition unit that acquires the current location and,
a display information generation unit that displays the said map data c the current location acquired by the said current location acquisition unit along with displaying the house numbers corresponding to the coordinate location of the said buildings

3. A survey (bird's-eye)-type navigation system according to Claim 2 that is **characterized by** the superimposition of the additional information associated with the said house numbers on the said map data, and further equipped with the additional information adding unit that displays at the coordinates corresponding to the house numbers of the said buildings.

4. The Survey (bird's-eye)-type navigation system according to Claim 2 that is **characterized by** the disaster prevention information or tourism information associated with the said house numbers.

5. The said Survey (bird's-eye)-type navigation system according to Claim 2 that is **characterized by**,
further equipped with,
an information retrieval unit that uses the said house numbers as a search keyword to search on the Internet, and acquires the Web in formation associated with the said house numbers as additional infor mation and,
an information classification unit that extracts predetermined character strings from the Web information acquired by the said information retrieval unit, determines the attributes of the Web information from the appearance frequency of the extracted character strings, associates the extracted attributes and said house numbers, and classifies and stores the said Web information as the said additional information.

6. The said Survey (bird's-eye)-type navigation system according to Claim 2 that is **characterized by**,
further equipped with,
an input interface that acquires the user operation to select the said house numbers on the map displayed by the said display information generation unit,
a current location correction unit that acquires the coordinates associated with the house number selected according to the said input interface from the map data storage unit, and based on the acquired coordinates requests modification of the current location to the current location acquisition unit along with executing the correction of the displayed map data.
